# EUROPEAN PATENT SPECIFICATION

(11) **EP 0 851 877 B1**
(45) Date of publication and mention of the grant of the patent: **04.10.2000**
(21) Application number: 97932030.6
(22) Date of filing: 18.07.1997
(51) Int. Cl.: C08F 6/20, B01D 57/02, B01D 61/42, C08F 114/26

(54) **METHOD FOR CONCENTRATING AQUEOUS TETRAFLUOROETHYLENE EMULSION BY ELECTRODIALYSIS AND ITS APPARATUS**
VERFAHREN ZUR KONZENTRATION EINER WÄSSRIGEN TETRAFLUORETHYLEN-EMULSION DURCH ELKTRODIALYSE UND APPARAT HIERZU
PROCEDE PERMETTANT DE CONCENTRER UNE EMULSION AQUEUSE DE TETRAFLUOROETHYLENE PAR ELECTRODIALYSE ET APPAREIL CORRESPONDANT

(30) Priority: 19.07.1996 KR 2905896
(43) Date of publication of application: 08.07.1998
(73) Proprietor: Korea Research Institute of Chemical Technology, Daejeon 305-343 (KR)
(72) Inventor: LEE, Jung Min, Taejeon 305-340 (KR); KOH, Jae Cheon, Yusung-gu, Taejeon 305-333 (KR); MOON, Sang Jin, Yusung-gu, Taejeon 305-333 (KR); KIM, Kwang Joo, Yusung-gu, Taejeon 305-333 (KR); JIN, Hang Kyo, Yusung-gu, Taejeon 305-333 (KR); KIM, Chul Ung, Yusung-gu, Taejeon 305-333 (KR); SO, Won Uook, Yusung-gu, Taejeon 305-333 (KR)
(74) Representative: Lieck, Hans-Peter, Dipl.-Ing.
(86) International application number: PCT/KR97/00142
(87) International publication number: WO 98/03561

(56) References cited:
- WO-A-92/21433
- US-A- 2 247 065
- US-A- 4 758 320

## Description

This invention relates to the method for concentrating aqueous polytetrafluoroethylene (abbreviated as PTFE, hereinafter) emulsion and its apparatus. Particularly, it relates to the rapid concentration method of aqueous PTFE emulsion without the formation of any kind of coagulating material and its apparatus.

Aqueous PTFE emulsion is well known to be used as the raw material for glossy agents, films, metal coatings, and ceramic coatings, etc. The aqueous PTFE emulsion to be commercially interesting has 60% of polymeric solid content, while the solid polymer content of PTFE emulsion prepared by emulsion polymerization is below 30% as the basis on polymeric solid content. Therefore, in order to increase the solid content in emulsion, the process for concentrating aqueous emulsion prepared by polymerization reaction has to surely follow. The traditional concentration methods of emulsions were carried out by sedimentation, vaporization, and adsorption methods using nonionic or cationic surfactant. The sedimentation method is to concentrate emulsions by precipitating solid polymer by means of a non-ionic or anionic surface active agent. The sedimentation method using ionic surfactant has shown the phenomena that the flocculated particles by peptizing of the inactive dispersing agent become emulsified again, when the excess water in the upper layer is eliminated after sedimentation( U.S.Pat. 2,478,229). Furthermore, the concentration using surfactant is necessary to dilute the emulsion in the early stage in order to prevent the flocculation phenomena of the emulsion, and ultimately requires a long concentration time. And also, the method using nonionic surfactant which shows the phenomenon of solubility inversion at above certain temperature has been carried out for the concentration of aqueous PTFE emulsions. It is necessary to concentrate emulsion by heating 50 - 80 °C, by dissolving the surfactant to emulsion and by adding a little amount of electrolytes (Canadian Pat. 536,455). As the concentration does not occur without adding the electrolyte or heating in this method, because of the stability of emulsion, it is impossible to obtain the emulsion with high concentration. This method, in fact, has difficulty in controlling the amount of electrolytes, because of the concentration of electrolytes being changed in very narrow temperature range. There are also concentration method by absorbing water using water - insoluble adsorption agents, such as silica gel or ion exchange resin, as an adsorption method( U,S.Pat. 3,668,167). As it is also known to carry out the concentration of emulsion by vaporization under reduced pressure of water contained in emulsion after stabilizing emulsion, it is difficult to avoid the formation of foams and any overheating (U.S.Pat. 3,316,201). The methods described above are very hard to apply to emulsions containing 30% of the solid content, but also are very difficult to avoid the flocculation of emulsion. Furthermore, concentration method using a large quantity of surfactants are necessary to recover surfactants contained in water of upper layer, and needs post-treatment processes for separating or treating wastes, after concentration. For conducting this process, much energy is required and environmental contamination problem is taken place.

An object of the present invention is to provide a new process for concentrating PTFE emulsion by electro-dialysis and its apparatus. A further object of this invention is that the surfactant used in PTFE emulsion polymerization process can be recovered, the concentration time required is shorter than that in conventional methods, and that the recovered surfactant can be reused.

These objects are achieved by a process according to claim 1 and an apparatus according to claim 12.

This invention is to provide the method for concentrating aqueous polytetrafluoroethylene emulsions and its apparatus characterizing to obtain effectively concentrated PTFE emulsion by precipitating, which derived PTFE particles in emulsions toward the electrode of opposite charge eliminating anionic surfactant existing in PTFE emulsion by electrodialysis using the properties that PTFE particles in emulsions have anionic charge after emulsion polymerization.

This invention is more embodied as following.

As PTFE emulsion retains polymer particles of about 30 nanometer, which are suspended with colloidal state, the sedimentation of the stabilized particles does not occur, even though has left for long time, due to repulsion of particles by the anionic surfactant adhered to particle surface and anionic surfactant existing in solution.

This invention is to concentrate the emulsion by precipitation, as eliminating anionic surfactant existing in particles in emulsion and water by electrodialysis, as using the properties with anionic charge for PTFE emulsion prepared from polymerization

Electrodialysis is the method to concentrate the aqueous colloidal particles by charging the electricity to suspension solution. As charging an electric current to suspension solution, the colloidal particles with electric charge is transferred horizontally to the electrode with opposite electric charge. The concentrated colloidal layer on the surface of the vertical membrane is formed by interrupting of the transferred colloidal particles at the membrane set vertically. As the colloid is precipitated by gravity, the solution is concentrated.

In this invention, as charging electric current to PTFE emulsion by electrodialysis, PTFE colloidal particles are transferred to positive electrode. As PTFE colloidal particles being transferred to positive electrode, the concentration occurs at its surface by interrupting on the membrane established with constant intervals. In here, nonionic surfactant prevents the phenomena adhering PTFE colloids to membrane in the concentration process, and the precipitation is accelerated , as inducing the phenomenon of bridge between them without coagulation of PTFE colloid at the around of membrane. After precipitation, concentrated PTFE emulsion with above 70% is obtained, as recovering it at the bottom from water layer of upper part.. The concentrated emulsion did not show the flocculation of particles by using the electrodialysis apparatus of this invention.

According to this invention, the waste water is not produced, and the formation of flocculation materials which can be produced in the conventional concentration process is completely prevented.

In this invention, it is important that adhering of emulsion to membrane surface can be prevented by using nonionic surfactant, and the coagulation of particles in the concentrated emulsion open occurring can also be eliminated, when the electric charge of the emulsion become neutral. The volatile electrolyte was used at the around of electrode, anionic surfactant transferred from emulsion can be easily recovered from electrolyte.

The phenomena adhering of colloidal particles to membrane surface, which can be occurring in the concentration process by above electrodialysis, can be prevented by adding nonionic surfactant, Triton X-100, and also polyethylene glycol alkyl ether can be used, instead of it.

According to the process and its apparatus of this invention, it has the following advantage in the concentration of PTFE emulsion.

First, Time for concentration of PTFE emulsion by this invention is outstandingly shorter than that by the conventional methods.

Second, Flocculation phenomena being able to occur during the concentration does not occur.

Third, Post-treatment processes for treating wastes and separating surfactants are not necessary, and waste materials are not produced.

Fourth, Recovery of anionic surfactants used in polymerization process is possible.

Fifth, Apparatus is simple.

According to this invention, concentrated PTFE having the advantage above and its own inherent property of PTFE emulsion, can be used as glossy agents, films metal and ceramic coatings, etc.

An embodiment of the present invention will now be described by way of example with reference to the one accompanying drawing showing an apparatus according to the present invention.

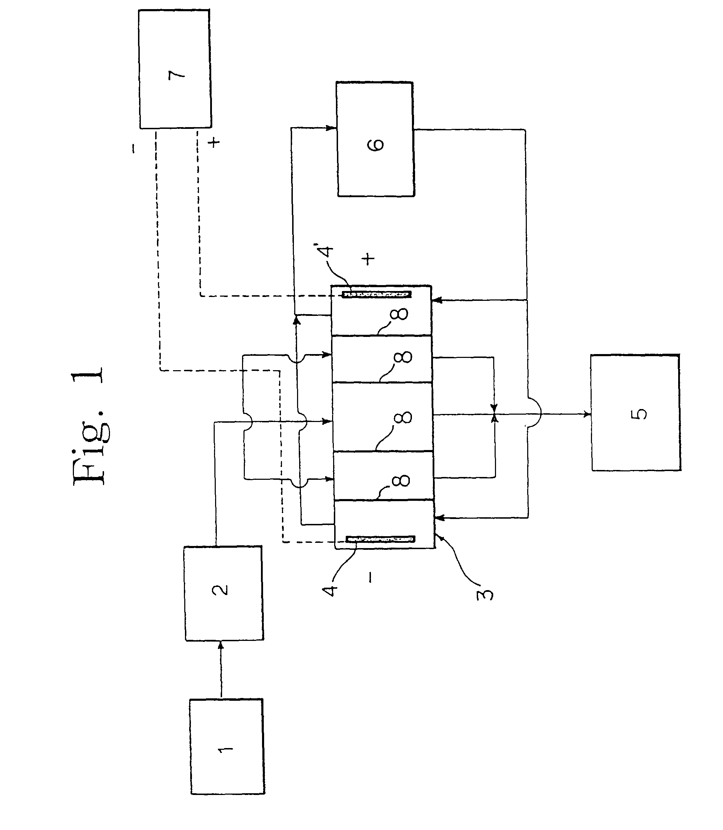

In the process of this invention described above, the apparatus like attached drawing 1 was used, and the apparatus of this invention according to drawing 1 is composed of the following items; storage tank of raw material PTFE emulsion(1), intermediate tank in order to feed surfactant and PH control(2), electrodialysis concentrating emulsion(3), storage tank of concentrated emulsion(5) flowing out from above electrodialysis apparatus, which has separated from aqueous solution of upper layer, electrolyte storage tank(6) in order to supplement the volatile electrolyte feeding to electrodes(4), electric power supplier(7), and multilayer membranes(8). The transportation of emulsion was carried out by pressure difference according to difference of head of apparatuses, (1),(2),(3), and (5), and mechanical transportation devices were not used. For instance, the head difference of the apparatuses was given to place at gradually lower position as following in order; emulsion storage tank of raw material PTFE(1), intermediate tank(2), electrodialysis apparatus(3), and concentrated emulsion storage tank(5), And also, these apparatus is operated as batch and continuous system.

The experiments were carried out with the electrodialysis apparatus manufactured according to this invention, the interval of the membrane can be adjusted in the range from 0.3 Cm to 3 Cm, and the surface of the membrane was 20 Cm². The membrane was set up between electrolyte and emulsion solution, and also can be set up as multilayer to increase the efficiency of concentration. The material of the electrode used was platinum..

This invention is more embodied according to the following examples.

### Example 1

PTFE emulsion with 25wt% of polymeric solid content from the storage tank(1) of raw material PTFE emulsion was fed to intermediate storage tank(2), and 5wt% of Triton X-100 based on polymeric solid content was added to it, and then adjusted to PH 7 using ammonia solution and slowly agitated. Emulsion mixture of intermediate tank(2) was divided into many parts by Multilayer membranes (8) of electrodialysis(3), and introduced to center cell of electrodialysis apparatus(3) composed of membrane passing the particle only with molecular weight, above 1000, and then 0.1 mole of volatile electrolyte was introduced to both of electrode cell. 10V voltage generated by electric supplier was charged to the cell with 30mm interval of membranes, and emulsion was concentrated for 80 min. in the batch system.

In this case, the initial electric current density was 80 mA/ m², and aqueous PTFE emulsion was concentrated to 70%, by polymeric solid content..

### Example 2-5

The experiments were carried out under the same conditions as example 1, except changing concentration of fed emulsion, initial electric current density, voltage, and concentration time as in Table 1, and the results were summarized in Table 1. The concentration time means the time required for concentrating PTFE emulsion to 70%, by polymeric solid content.

**Table 1.**

| Result for the concentration of PTFE emulsion by changing the voltage | | | | |
|---|---|---|---|---|
| Example | Fed emulsion concentration (wt %) | Initial electric current density (mA/m²) | Voltage ( V ) | Concentration time ( min. ). |
| 2 | 30 | 90 | 20 | 65 |
| 3 | 25 | 160 | 40 | 58 |
| 4 | 50 | 280 | 60 | 26 |
| 5 | 40 | 200 | 70 | 31 |

### Example 6-9

The experiments were carried out under the same conditions of Example 1, except changing concentration of fed emulsion, initial electric current density, voltage, and concentration time as in Table 2, and setting up membrane interval with 7 mm instead of 30 mm in Example 1, and results were summarized in Table 2. The concentration time is the time required for concentrating PTFE emulsion to 70%, by polymeric solid content.

**Table 2.**

| The results for PTFE concentration , when the membrane interval is 7 mm | | | | |
|---|---|---|---|---|
| Example | Fed emulsion concentration ( wt %) | Initial electric current density (mA/m²) | Voltage (V) | Concentration time (min.) |
| 6 | 25 | 87 | 20 | 15.0 |
| 7 | 15 | 160 | 40 | 5.0 |
| 8 | 6 | 245 | 60 | 5.1 |
| 9 | 4 | 280 | 70 | 4.2 |

### Example 10-13

The experiments were carried out under the same condition of Example 1, except changing the concentration of fed emulsion, initial electric current density, voltage, and concentration time as in Table 3, The concentration time is the time required for concentrating PTFE emulsion to 70%, by polymeric solid content.

**Table 3.**

| The results for PTFE concentration, when the membrane interval is 0.5 mm | | | | |
|---|---|---|---|---|
| Example | Fed emulsion concentration ( wt %) | Initial electric current density (mA/m²) | Voltage (V) | Concentration time (min.) |
| 10 | 2 | 250 | 20 | 6.8 |
| 11 | 10 | 300 | 40 | 3.5 |
| 12 | 40 | 320 | 60 | 1.5 |
| 13 | 30 | 320 | 70 | 1.3 |

### Example 14

The experiment was carried out under the same condition of Example 1, except adding polyethylene glycol alkyl ether instead of surfactant, Triton X-100 in Example 1. When below 5 wt% of surfactant to weight of PTFE emulsion was used, there was appeared the phenomena adhering PTFE colloid to the membrane of electrodialysis apparatus. The adhering phenomena like this was disappeared, as using above 5wt% surfactant.

### Example 15

The experiment was carried out under the same condition of Example 1, except changing PH of PTFE emulsion, as 2, 4, 10, and 12 in Example 1.

As the results in this case, the required time to concentrate PTFE emulsion to 70 wt% was 95, 75, 85, and 80 min., respectively.

### Example 16

Continuous concentration was carried out by feeding PTFE emulsion with 25 wt% of polymeric solid content, stored at storage tank of raw material PTFE emulsion(1) to intermediate tank(2), and feeding 5wt% of Triton X-100 based on polymeric solid content to tank(2) under gentle agitaion, adjusting PH of emusion to 7 by using ammonia solution, and then feeding emulsion mixture of intermediate tank(2) to respective cell of electrodialysis apparatus with 3cc/min. by the elevation difference of the equipments. Membranes passing the material with molecular weight above 1000 was set and divided into many parts by multilayer membranes(8) in electrodialysis cell(5). 0.1 mole of volatile electrolyte to both electrode cells was feeded and 30V of voltage by electric power supplier was charged into cell composed of 3 compartment with 30 mm interval between membranes.

A PTFE emulsion was concentrated into 60% - 70% by polymeric solid content.

List of the reference numbers:
- 1: Storage tank of raw material PTFE elmusion
- 2: Intermediate tank
- 3: Electrodialysis apparatus
- 4, 4': Electrodes
- 5: Storage tank of concentrated emulsion
- 6: Electrolyte storage tank
- 7: Electric power supplier
- 8: Multilayer membranes

## Claims

1. Method for concentrating aqueous PTFE emulsion by precipitation, the aqueous PTFE emulsion containing anionic surfactant and 2 - 40 %, by weight, of PTFE polymeric solid,
characterized in
that after adding a nonionic surfactant to the aqueous PTFE emulsion, the emulsion undergoes an electrodialysis treatment, in which the emulsion is fed to the membrane cells of an electrodialysis apparatus and the anionic surfactant is eliminated.

2. Method according to claim 1, in which the pH value of the aqueous PTFE emulsion prior to the electrodialysis is controlled to be in the range of 7 - 10.

3. Method according to claim 1 or 2, in which for performing the electrodialysis membranes passing molecules with a molecular weight above 1000 are used.

4. Method according to claim 1, 2 or 3, in which the electrodialysis is performed with an electric current density of 90 - 320 mA/m².

5. Method according to anyone of claims 1 to 4, in which the electrodialysis is performed with an electric field intensity of 2 - 60 V/cm between the membranes.

6. Method according to anyone of claims 1 to 5, in which the added surfactant is above 5 wt%, based on polymeric solid content of the PTFE emulsion.

7. Method according to anyone of claims 1 to 6, in which the added surfactant is polyethylene glycol alkyl ether.

8. Method according to anyone of claims 1 to 6, in which the added surfactant is Triton X-100.

9. Method according to anyone of claims 1 to 8, in which an electrolyte is passed to the electrode cells of the electro-dialysis apparatus.

10. Method according to anyone of claims 1 to 9, in which the electrodialysis is performed batchwise.

11. Method according to anyone of claims 1 to 9, in which the electrodialysis is performed continuously and the aqueous PTFE emulsion is fed to the electrodialysis apparatus by means of gravity.

12. Apparatus for performing the method according to claim 10, comprising a storage tank (1) for the aqueous PTFE emulsion to be concentrated, an intermediate tank (2) for adding the nonionic surfactant, an electrodialysis apparatus (3), and a storage tank (5) for the concentrated emulsion, the electro-dialysis apparatus (3) comprising a positive and a negative electrode (4; 4') connected to an electric power supply (7) and monolayer or multilayer membranes (8) between the electrodes.

13. Apparatus for performing the method according to claim 11, comprising a storage tank (1) for the aqueous PTFE emulsion to be concentrated, an intermediate tank (2) for adding the nonionic surfactant, an electrodialysis apparatus (3), and a storage tank (5) for the concentrated emulsion, the electro-dialysis apparatus (3) comprising a positive and a negative electrode (4; 4') connected to an electric power supply (7) and multilayer membranes (8) between the electrodes.

14. Apparatus according to claim 12 or 13, in which the membranes (8) are spaced apart by a distance of 0,5 - 30 mm.

15. Apparatus according to claim 12, 13 or 14, in which the membranes (8) are passing molecules with a molecular weight above 1000.

16. Apparatus according to claim 15, in which the membranes (8) are of cellulose.

## Patentansprüche

1. Verfahren zur Konzentration einer wässrigen PTFE-Emulsion durch Fällung, wobei die wässrige PTFE-Emulsion ein anionisches oberflächenaktives Mittel und 2-40 Gew.% PTFE-Polymerfeststoffe enthält,
dadurch gekennzeichnet,
daß nach Hinzufügung eines nichtionischen oberflächenaktiven Mittels zu der wässrigen PTFE-Emulsion die Emulsion eine Elektrodialyse-Behandlung durchläuft, bei der die Emulsion den Membranzellen einer Elektrodialyse-Vorrichtung zugeführt und das anionische oberflächenaktive Mittel eliminiert wird.

2. Verfahren nach Anspruch 1, bei dem der pH-Wert der wässrigen PTFE-Emulsion vor der Elektrodialyse so kontrolliert wird, daß er im Bereich von 7-10 liegt.

3. Verfahren nach Anspruch 1 oder 2, bei dem zur Durchführung der Elektrodialyse Membranen eingesetzt werden, die Moleküle mit einem Molekulargewicht von über 1000 passieren lassen.

4. Verfahren nach Anspruch 1, 2 oder 3, bei dem die Elektrodialyse mit einer elektrischen Stromdichte von 90-320 mA/m² durchgeführt wird.

5. Verfahren nach einem der Ansprüche 1 bis 4, bei dem die Elektrodialyse mit einer elektrischen Feldstärke von 2-60 V/cm zwischen den Membranen durchgeführt wird.

6. Verfahren nach einem der Ansprüche 1 bis 5, bei dem das hinzugefügte oberflächenaktive Mittel über 5 Gew.% liegt, basierend auf dem Polymerfeststoffgehalt der PTFE-Emulsion.

7. Verfahren nach einem der Ansprüche 1 bis 6, bei dem das hinzugefügte oberflächenaktive Mittel Polyethylenglykolalkylether ist.

8. Verfahren nach einem der Ansprüche 1 bis 6, bei dem das hinzugefügte oberflächenaktive Mittel Triton X-100 ist.

9. Verfahren nach einem der Ansprüche 1 bis 8, bei dem ein Elektrolyt den Elektrodenzellen der Elektrodialyse-Vorrichtung zugeleitet wird.

10. Verfahren nach einem der Ansprüche 1 bis 9, bei dem die Elektrodialyse batchweise durchgeführt wird.

11. Verfahren nach einem der Ansprüche 1 bis 9, bei dem die Elektrodialyse kontinuierlich durchgeführt und die wässrige PTFE-Emulsion der Elektrodialyse-Vorrichtung durch Schwerkraft zugeführt wird.

12. Vorrichtung zur Durchführung des Verfahrens nach Anspruch 10 mit einem Speicherbehälter (1) für die zu konzentrierende wässrige PTFE-Emulsion, einem Zwischenbehälter (2) zum Hinzufügen des nichtionischen oberflächenaktiven Mittels, einer Elektrodialyse-Vorrichtung (3) und einem Speicherbehälter (5) für die konzentrierte Emulsion, wobei die Elektrodialyse-Vorrichtung (3) eine positive und eine negative Elektrode (4; 4'), die an eine elektrische Stromversorgung (7) angeschlossen sind, und einlagige oder mehrlagige Membranen (8) zwischen den Elektroden aufweist.

13. Vorrichtung zur Durchführung des Verfahrens nach Anspruch 11, mit einem Speicherbehälter (1) für die zu konzentrierende wässrige PTFE-Emulsion, einem Zwischenbehälter (2) zum Hinzufügen des nichtionischen oberflächenaktiven Mittels, einer Elektrodialyse-Vorrichtung (3) und einem Speicherbehälter (5) für die konzentrierte Emulsion, wobei die Elektrodialyse-Vorrichtung (3) eine positive und eine negative Elektrode (4; 4'), die an eine elektrische Stromversorgung (7) angeschlossen sind, und mehrlagige Membranen (8) zwischen den Elektroden aufweist.

14. Vorrichtung nach Anspruch 12 oder 13, bei der die Membranen (8) in einem Abstand von 0,5-30 mm zueinander angeordnet sind.

15. Vorrichtung nach Anspruch 12, 13 oder 14, bei der die Memranen (8) Moleküle mit einem Molekulargewicht von über 1000 passieren lassen.

16. Vorrichtung nach Anspruch 15, bei der die Membranen (8) aus Cellulose gebildet sind.

## Revendications

1. Procédé de concentration d'une émulsion aqueuse de polytétrafluoroéthylène par précipitation, l'émulsion aqueuse de polytétrafluoroéthylène contenant un agent tensioactif anionique et de 2 à 40% en poids de polytétrafluoroéthylène solide,
caractérisé en ce que
après avoir ajouté un agent tensioactif non ionique à l'émulsion aqueuse de polytétrafluoroéthylène, on fait subir à l'émulsion un traitement par électrodialyse dans lequel l'émulsion est envoyée aux cellules à membrane d'un appareil d'électrodialyse et l'agent tensioactif est éliminé.

2. Procédé suivant la revendication 1, dans lequel le pH de l'émulsion aqueuse de polytétrafluoroéthylène avant l'électrodialyse est réglé de manière à être compris entre 7 et 10.

3. Procédé suivant la revendication 1 ou 2, dans lequel pour effectuer l'électrodialyse on utilise des membranes laissant passer des molécules d'un poids moléculaire supérieur à 1000.

4. Procédé suivant la revendication 1, 2 ou 3, dans lequel on effectue l'électrodialyse avec une densité de courant électrique de 90 à 320 mA/m².

5. Procédé suivant l'une quelconque des revendications 1 à 4, dans lequel on effectue l'électrodialyse avec une intensité du champ électrique de 2 à 60 V/cm entre les membranes.

6. Procédé suivant l'une quelconque des revendications 1 à 5, dans lequel l'agent tensioactif qui est ajouté représente plus de 5% du poids du polymère solide de l'émulsion de polytétrafluoroéhtylène.

7. Procédé suivant l'une quelconque des revendications 1 à 6, dans lequel l'agent tensioactif qui est ajouté est un étheroxyde alcoolique du polyéthylène glycol.

8. Procédé suivant l'une quelconque des revendications 1 à 6, dans lequel l'agent tensioactif qui est ajouté est le Triton X-100.

9. Procédé suivant l'une quelconque des revendications 1 à 8, dans lequel on envoie un électrolyte aux cellules d'électrode de l'appareil d'électrodialyse.

10. Procédé suivant l'une quelconque des revendications 1 à 9, dans lequel on effectue l'électrodialyse en discontinu.

11. Procédé suivant l'une quelconque des revendications 1 à 9, dans lequel on effectue l'électrodialyse en continu et on charge l'émulsion aqueuse de polytétrafluoroéthylène à l'appareil d'électrodialyse par gravité.

12. Installation pour effectuer le procédé suivant la revendication 10 comprenant une cuve (1) de stockage de l'émulsion aqueuse de polytétrafluoroéthylène à concentrer, une cuve (2) intermédiaire pour ajouter l'agent tensioactif, un appareil (3) d'électrodialyse et une cuve (5) de stockage de l'émulsion concentré, l'appareil (3) d'électrodialyse comprenant une électrode (4) positive et une électrode (4') négative reliées à une source (7) de courant électrique et des membranes (8) à une seule couche ou à plusieurs couches entre les électrodes.

13. Installation pour effectuer le procédé suivant la revendication 11, comprenant une cuve (1) de stockage de l'émulsion aqueuse de polytétrafluoroéthylène à concentrer, une cuve (2) intermédiaire pour ajouter l'agent tensioactif non ionique, un appareil (3) d'électrodialyse et une cuve (5) de stockage de l'émulsion concentré, l'appareil (3) d'électrodialyse comprenant une électrode (4) positive et une électrode (4') négative reliées à une source (7) de courant électrique et des membranes (8) à couche multiple entre les électrodes.

14. Installation suivant la revendication 12 ou 13, dans laquelle les membranes (8) sont espacées d'une distance de 0,5 à 30 mm.

15. Installation suivant la revendication 12, 13,ou 14, dans laquelle les membranes (8) laissent passer les molécules d'un poids moléculaire supérieur à 1000.

16. Installation suivant la revendication 15, dans laquelle les membranes (8) sont en cellulose.
